# EUROPEAN PATENT APPLICATION

(11) **EP 2 369 900 A1**
(43) Date of publication of application: **28.09.2011**
(21) Application number: 10157752.6
(22) Date of filing: 25.03.2010
(51) Int. Cl.: H05B 37/02, F21V 23/04

(54) **System and method for automatically controlling an ambient atmosphere**

(71) Applicant: Koninklijke Philips Electronics N.V., 5621 BA Eindhoven (NL)
(72) Inventor: Aliakseyeu, Dzmitry, V., 5600 AE, Eindhoven (NL); Van De Sluis, Bartel., N., 5600 AE, Eindhoven (NL); Pauws, Steffen, C., 5600 AE, Eindhoven (NL); Vignoli, Fabio,, 5600 AE, Eindhoven (NL); van Doorn, Gerardus, L., M., 5600 AE, Eindhoven (NL)
(74) Representative: Damen, Daniel Martijn

(57) **Abstract**

The invention provides a system for automatically controlling an ambient atmosphere in an area. The system comprises a sensor arranged to sense individual characteristics of a plurality of people present in the area and to generate a corresponding sensor signal. The system comprises a controller arranged to receive the sensor signal, to determine a population characteristic from the sensor signal, and to generate a corresponding rendering signal from the population characteristic according to a predetermined scheme. The system further comprises a rendering device arranged to generate the atmosphere depending on the rendering signal. The invention further provides a method for automatically controlling an ambient atmosphere in an area, and a computer program arranged to execute such method.

## Description

### FIELD OF THE INVENTION

The invention relates to a system and a method for automatically controlling an ambient atmosphere in an area.

### BACKGROUND OF THE INVENTION

Currently an ambient atmosphere, or "ambience", in public and quasi-public areas such as stores as well as product presentations is more or less fixed, and typically only periodically changed. When choosing an ambience for a store or a particular area in the store, a designer usually takes into account his prior knowledge in the type and number of customers that are visiting the store and the target customers for a particular product range. In some dynamic known systems, the designer moreover takes into account his prior knowledge on the different types and different number of shoppers present in the store depending on time of day, day of the week and season, and changes the ambience according to the assumed type and/or number.

International patent application WO 2009/090598 Al describes an automatic adjusting of a lighting atmosphere based on presence detection, particularly based on the detection of the presence of people in a monitored area. An embodiment of WO 2009/090598 Al describes a system for automatically adjusting a lighting atmosphere based on presence detection, comprising at least one sensor for gathering information on the presence of people in a supervised area, and a processing unit being adapted for determining the presence level of people in the supervised area based on the gathered information and for adjusting the lighting atmosphere based on the determined presence level by controlling the dynamics level of the lighting atmosphere depending on the determined presence level. The embodiment of WO 2009/090598 Al allows for example to reduce the level of dynamics of the lighting atmosphere if the number of people in the supervised area increases, i.e. the supervised area becomes crowded.

### SUMMARY OF THE INVENTION

A disadvantage of many of the prior art solutions may for instance be that the actual *type* of people present in the area, e.g. type of shoppers in the shop, may vary rather significantly from the assumed type (if the type of people is taken into account at all), which is based on an average shopper pattern based on acquired statistics over some earlier period of time. Also the distribution over different types of the detected number of people may vary significantly. The ambient atmosphere that is determined based on an expected number and type of shoppers based on prior knowledge of the shoppers may thus not be optimal, or not even be adequate, for the people actually present.

There is a desire to provide a system and method which automatically controls the ambient atmosphere in an area in a more adequate manner. It may be a further desire to provide a system that automatically provides an ambient atmosphere which matches well with the actual persons present. It may be another desire to provide a system that is adequate for a wide variety of different pluralities of people of different type, and of different number, in particular when a plurality of people are present within the same area and subject to the same ambient atmosphere.

Hence, it is an object of the invention to provide an alternative system for controlling an ambient atmosphere, which preferably further at least partly obviates one or more of above-described drawbacks, and which may further preferably fulfill one or more of the above indicated desires.

Hereto, the invention provides, in a first aspect, a system for automatically controlling an ambient atmosphere in an area, comprising:
- a sensor arranged to:
   - sense individual characteristics of a plurality of people present in the area, and
   - generate a corresponding sensor signal;
- a controller arranged to:
   - receive the sensor signal,
   - determine a population characteristic from the sensor signal, and
   - generate a corresponding rendering signal from the population characteristic according to a predetermined scheme; and
   - a rendering device arranged to generate the atmosphere depending on the rendering signal.

The ambient atmosphere is thus controlled in dependence on the population characteristics of the plurality of people present in the area. The plurality of people present in the area may also be referred to as the actual population. The ambient atmosphere is thus generated according to the actual population, instead of purely relying on the expected or estimated population based on prior knowledge about the (expected) plurality of people in the area. The ambient atmosphere may thus be automatically set and/or automatically adapted by the system to optimally match the plurality of types of people present. The population characteristic may be derived from the individual characteristics so as to allow an optimal match between the ambient atmosphere that is most appreciated by the actual population and the ambient atmosphere that is being generated by the rendering device. Each population characteristic may relate to a specific optimal ambient atmosphere.

The term "sensor" may relate to a single sensor, a plurality of sensors of identical type, a plurality of sensors of different types, a sensor network, a sensor infrastructure, or any other sensor system capable of detecting individual characteristics of a plurality of people.

The sensor senses individual characteristics of all people present, from which the sensor may generate a corresponding sensor signal.

The sensor signal may directly reflect the sensed individual characteristics, e.g. correspond to a plurality of sensor signal components, each sensor signal component being indicative of the sensed individual characteristic of a specific individual, e.g. reflecting the age of the specific individual.

Alternatively, the sensor may comprise a sensor processor, arranged to process the sensed individual characteristics into a signal reflecting e.g. the average age of the people present. Such sensor may also be referred to specifically as a smart sensor. The sensor processor may be part of the controller. When the sensor processor is separate from the controller, the sensor signal sent from the smart sensor to the controller may already be on the level of a population characteristic; in that case, the controller may determine the population characteristic substantially directly from the sensor signal and the controller effectively only generates the rendering signal to control the rendering device based on the population characteristic. In such embodiment, the sensor processor may be considered as part of the controller.

The controller may e.g. determine the population characteristic as an average of individual characteristics of all people present, wherein the average may e.g. be defined to exclude one or more individual characteristic that deviate strongly from the average. The controller may alternatively or additionally derive the population characteristic as a characteristic that the plurality of individual characteristics have, completely or largely, in common, e.g. by determining the population characteristic as the gender of the majority of the people present, e.g. expressed as "(in majority) male" or "(in majority) female", or as a most common stereotype defined e.g. by classifications as used in marketing, e.g. qualitative classifications as "conservative" and "trendy", or e.g. a marketing qualification according to the five types "innovators", "early adaptors", "early majority", "late majority" and "laggards". The controller may be a separate device. Alternatively, the controller may e.g. comprise a central controlling unit and distributed controller units, all performing parts of the function of the controller; the distributed controller units may e.g. be sensor processors in the sensors (see also above).

In operation, the controller may receive the sensor signal, determine the population characteristic from the sensor signal, and determine the rendering signal from the population characteristic according to a predetermined scheme. The predetermined scheme may directly or indirectly define the rendering signal corresponding to an ambient atmosphere that matches best with the population characteristics of the actual population. The rendering device may then generate the ambient atmosphere according to the rendering signal.

It will be appreciated that, when the sensor is a smart sensor which generates a sensor signal on the level of a population characteristic, the controller may, in operation, receive the sensor signal, substantially directly retrieve the population characteristic from the sensor signal, and determine the rendering signal from the population characteristic according to the predetermined scheme. The rendering device may then generate the ambient atmosphere according to the rendering signal.

The term "rendering device" may relate to a single device arranged to generate some kind of perceivable effect, such as light, sound, fragrance, vibration, and the like. The term "rendering device" may relate to a plurality of such devices, which may comprise devices of the same type or of different types. The term "rendering device" may relate to an atmosphere rendering infrastructure comprising a plurality of rendering devices, which may e.g. be a networked infrastructure comprising a plurality of such rendering devices. The rendering device could e.g. comprise a lighting system, which may for instance generate lighting matching the population characteristic, e.g. generates colorful and vivid lighting effects in the area where the plurality of people is present when the population characteristic is "trendy". The rendering device could e.g. additionally or alternatively comprise a sound system which generates a soundscape matching the population characteristic e.g. plays classical music in the area when the population characteristic is "conservative". Other suitable rendering devices could e.g. be a fragrance dispenser, or any other device which generates a perceivable effect. The system thus automatically provides an ambient atmosphere which matches well with the plurality of persons actually present in the area.

The term "rendering signal" may relate to a signal capable to control the rendering device to generate some kind of perceivable effect with the rendering device, and thus generate the ambient atmosphere. The rendering signal may comprise one or more signal components to control an individual rendering device in e.g. intensity and/or amplitude (e.g. color, flavor, ...). The rendering signal may comprise one or more signal components defining some spatial, temporal or spatio-temporal patterns, such as audio, video, lighting pattern, decorative lighting and the like. The rendering signal may be communicated wireless or wired.

The term "ambient atmosphere" or "ambience" in an area relates to the presence of one or more of lighting, sound, fragrance, vibration, and/or other perceivable effect, which may be experienced (seen, heard, smelled, ...) by a person when the person is in the area.

The term "area" may relate to a (partially) open or confined area where persons may be present. In particular, it may not be known in advance which specific persons will be present at what moment in time. The area may e.g. be a shop, or a specific area or zone within a shop, a waiting room, hotel or restaurant lobby or another hospitality area, or any other area where public may easily enter and exit. The area may be publicly accessible for any person, or may be a controlled area to which only qualified persons can have access. Especially, the area is an indoor area.

The term "qualified person" may refer e.g. to persons satisfying a threshold of a specific individual characteristic, e.g. only adults, or e.g. shoppers having a loyalty card, or visitors having entrance tickets.

The term "individual characteristic (of a person)" relates to any quality of a person that may be relevant in determining the ambient atmosphere suitable for the person, e.g. a demographic quality such as age, gender, educational level, or qualities such as fashion style and personal interest, e.g. buying pattern in a shop.

The term "population characteristic (of a plurality of people)" relates to any quality that may be assigned to a plurality of persons present (the "actual population") and that may be relevant in determining the ambient atmosphere suitable for the actual population. In particular the term "population characteristic (of a plurality of people)" may correspond to one or more individual characteristics that are compatible with, at least part of, the actual population. The term "population characteristic" may e.g. correspond to one or more individual characteristics that the persons have, at least partly, in common. Alternatively, the term "population characteristic" may correspond to an average of (one or more) individual characteristics over the actual population. The average may or may not exclude individuals that differ more than a predetermined value or fraction of the average. The average may e.g. exclude individuals of a specific individual characteristic. The term "population characteristic (of a plurality of people)" could thus e.g. relate to average age, gender of the majority, preference for a specific type of articles, fashion, etc. The term "population characteristic (of a plurality of people)" could relate to one such characteristic, or to a combination of one or more of these characteristics. The term "population characteristic" may also include the number of people, but does not refer to the number of people only.

Specific embodiments are described below. As will be clear to the person skilled in the art, embodiments may be combined.

In an embodiment, to generate the corresponding rendering signal from the population characteristic according to the predetermined scheme, the controller is arranged to at least:
- compare the population characteristic with a plurality of predetermined population profiles for finding a matching profile, wherein each predetermined population profile is associated with a respective predetermined ambient atmosphere with a corresponding preset for the rendering signal,
- determine a matching preset corresponding to the matching profile, and
- determine the rendering signal from the matching preset.

Hereby, a rendering signal may be determined from which the rendering device generates an ambient atmosphere that may match (well) with the actual population. The comparison of the population characteristics with a plurality of predetermined population profiles could e.g. comprise a one-by-one comparison of the population characteristics with each element of a list of predetermined population profiles. The finding of the matching profile could then e.g. comprise the selection of the predetermined population profile that matches best with the population characteristics.

Alternatively, the finding of the matching profile could then e.g. comprise the selection of two predetermined population profile that closely match with the population characteristics, and determining a (straight or weighted) average of the two predetermined population profile.

In an alternative or a further embodiment, in order to generate the corresponding rendering signal from the population characteristic according to the predetermined scheme, the controller is arranged to at least:
- initialize the rendering signal with a predetermined rendering signal associated with a predetermined ambient atmosphere corresponding to a predetermined population profile, and
- in one or more iterations:
   - determine a difference between the population characteristics and the predetermined population profile, and
   - adjust the rendering signal depending on the difference.
The predetermined scheme may thus result in a setting, or adapting, of the ambient atmosphere that is not restricted to a number of atmospheres, but is rather steered towards an ambient atmosphere that matches best by iterating from a starting point provided by the predetermined rendering signal associated with a predetermined ambient atmosphere corresponding to a predetermined population profile. The predetermined rendering signal, predetermined ambient atmosphere and predetermined population profile could be a fixed signal, atmosphere and profile, which may also be referred to as a default signal, atmosphere and profile. The predetermined rendering signal could e.g. be the rendering signal obtained at an earlier moment in time, e.g. before the actual population changed, or as determined from a comparison of the population characteristic with the plurality of predetermined profiles as described above. The predetermined rendering signal, predetermined ambient atmosphere and predetermined population profile could alternatively relate to an expected population based on prior knowledge, e.g. based on information from the shop owners on the shopper pattern over the day / week / month. The predetermined rendering signal, predetermined ambient atmosphere and predetermined population profile could alternatively relate to a rendering signal determined at an earlier time on the same day or at an earlier day and the corresponding ambient atmosphere and population characteristic.

The rendering signal could e.g. comprise a plurality of parameters controlling multiple aspects of the rendering device, e.g. color, color intensity, smell. The predetermined scheme could then comprise the (fine-)adjusting of e.g. one parameter of these parameters, e.g. the amplitude of saturated color depending on the difference between the actual average age of the population and the default age assumed for a default atmosphere. The predetermined scheme could alternatively comprise an amplification factor of another component, e.g. an amplification factor for intensity depending on the actual average, or maximum, age of elderly person in a reading room for elderly to obtain optimal reading conditions. The term "rendering device", may include a plurality of rendering devices, such as both a controllable lighting system and a sound generation unit such as an audio system (see also above).

In an embodiment, the system is arranged to automatically adjust the ambient atmosphere upon a change in the population characteristic. This may provide an efficient implementation for accounting on a change of the actual population. The adjustment could be a feed forward or a feedback style, e.g. directly by detecting a change in the population characteristic; indirectly by detect a change in individual characteristics due to people leaving/entering; or indirectly by comparing detecting that the matched preset has changed from one preset to another.

In an embodiment, the controller is arranged to determine the rendering signal further using a predetermined population profile associated with an expected plurality of people expected to be present in the area. The predetermined population profile may e.g. correspond to previously acquired knowledge, or personal experience from e.g. the shop owner on the typical population present at some specific time (moment during the day, week or month), defining the shop owner's expectation of the number and type of the plurality of people expected to be present in the area. The use of such predetermined population profile may be advantageous in obtaining the most optimal ambient atmosphere, especially when it provides additional information than can be obtained from the sensors.

In an embodiment, the controller is arranged to determine the population characteristic from one or more of (a) an averaged characteristic and (b) a common characteristic of a predetermined fraction of the plurality of individual characteristics of the plurality of people present in the area. Hereby, it may be prevented that the presence of a minority of individuals that deviates strongly in one or more individual characteristics from the majority of the persons present, results in an ambient atmosphere that is not well suited for the majority. E.g., individual characteristics may first be classified in broader groups (e.g. ranges of one parameter, e.g. age range), after which groups only the group(s) with the largest number of individuals are used to determine the population characteristic. Alternatively, when determining the population characteristic, the average may e.g. only use the middle 70% values of the distribution of a specific individual characteristic. Additionally or alternatively, the classification according to a common characteristic may e.g. require a characteristic that is of the same classification for e.g. at least 70% of the individuals.

In an embodiment, the rendering device comprises a controllable lighting system, preferably comprising at least one light emitting diode, preferably a plurality of light emitting diodes. This allows to set and change an illumination profile, also referred to as lightscape, of the area e.g. the brightness of illumination of the area or specific zones in the area, and/or, when the color(s) of the light generated by light source can controlled, the color(s) of illumination and/or the dynamics of changes of the illumination profile. The controllable lighting system may comprise e.g. diffuse light sources and/or directive light sources such as spot lights, and may be arranged to provide direct or indirect lighting.

In an embodiment, the rendering device comprises at least one unit selected from a group consisting of a sound system and a fragrance dispenser. This allows acting on other senses such as hearing and smelling.

In a further embodiment, the rendering device further comprises a display unit such as a television screen or a projector. This allows for additionally presenting information to one or more of the persons present in the area. Also, this may supplement the ambient atmosphere with further visual stimuli.

In an embodiment, the population characteristic is associated with at least a demographic property associated with one or more properties selected from the group consisting of age, gender, fashion and lifestyle of the plurality of people present in the area. The inventors have found that these properties are particularly useful in determining the population characteristic as well as being particularly relevant for choosing the ambient atmosphere, especially when the area is a shop or zone in a shop, or when the area is a hospitality area. Moreover, these characteristics may be well detectable, e.g. as described by the preferred embodiments below.

In an embodiment, the sensor comprises a detector arranged to detect, for each person of the plurality of people, a physical characteristic of the person and to analyze the physical characteristic to estimate the individual characteristic of the person. A physical appearance may e.g. comprise visible characteristics, such as length, sizes of body parts, facial expressions, gestures, degree of activity, as well as other measurable quantities such as e.g. weight. Thus, especially when determining one or more of the individual characteristics of the embodiment described just before, e.g. age, gender, fashion style, lifestyle, a detector could be used to detect physical characteristics for determining, either accurately or by estimation, one or more individual characteristics of each person. More advanced detectors could also detect e.g. gaze direction, attention time given to a specific object, dwelling time in a zone of the area, the type of clothing, jewelry and other fashion items, worn by the people, articles being tried by the people, or social behaviors (e.g. discriminate between group behavior and solo behavior. Such detector could e.g. be a surveillance camera, a dedicated camera, a sound detector, a pressure detector e.g. acting as position sensor, a weighing device, etc.

In an embodiment, the sensor comprises a camera for acquiring an image of one or more persons of the plurality of people and an image processor arranged to estimate one or more corresponding individual characteristic from the at least one image using an image processing algorithm. The camera may e.g. acquire an image comprising a person's face, and the image processor may be arranged to estimate e.g. age, gender, or emotional state of the person from the person's facial characteristics and/or expression.

In an embodiment, the sensor comprises a localization sensor for detecting positions in the area, and optionally orientations relative to one or more predefined orientations in the area, of each person of the plurality of people. Position and/or orientation may e.g. be used in determining individual characteristics, such as interest in a specific fashion and type of products. Position and/or orientation may be used in determining the population characteristic, e.g. as a weigh factors when determining a population characteristic as a weighted average of a plurality of individual characteristics.

In an embodiment, the sensor comprises a tag reader arranged to acquire prestored data from a tag carried by a person entering, being present and/or leaving the area, wherein the prestored data is indicative of an individual characteristic of the person. A tag may e.g. be in the form of loyalty card carrying information on a shopper's age, gender, living situation, buying pattern, spending behavior, which may provide additional information about the individuals, especially also information that may not be easily detectable from the physical appearance of the person itself. The tag may e.g. be a. wireless tag allowing a wireless readout, such as an RFID tag or an NFC device.

In an embodiment, the area comprises a plurality of subareas and the system is arranged to automatically control the ambient atmosphere in one or more subareas, preferably in each subarea of the plurality of subareas depending on the pluralities of people present in the respective plurality of subareas. A single larger area, e.g. shop, may thus be provided with different ambient atmospheres in different subareas within the larger area, e.g. shopping zones directed to different buyers.

In the embodiments, the term "plurality of people" relates to any number of people larger than 2, especially in the range of 2-5000, like 2-100, such as 4-100, and 4-20.

The invention further provides an area, in particular a shop or a hospitality area, equipped with a system according to any embodiment according to the invention. According to another aspect, the invention provides a method for automatically controlling an ambient atmosphere in an area, comprising:
- determining a population characteristics from a plurality of individual characteristics of a plurality of people present in the area,
- determining a rendering signal from the population characteristics according to a predetermined scheme, and
- generating the ambient atmosphere depending on the rendering signal.

The advantageous effect(s) of the method according to the invention compared to the prior art are similar to those described above with reference to the system according to the invention. For controlling the ambient atmosphere the system as herein described may be applied.

In further embodiments, the method comprises actions described above with reference to the system. The advantages of the further embodiments will be clear from the description of the embodiments of the system above.

In an embodiment, determining the rendering signal from the population characteristics according to the predetermined scheme comprises:
- comparing the population characteristic with a plurality of predetermined population profiles for finding a matching profile, wherein each predetermined population profile is associated with a respective predetermined ambient atmosphere with a corresponding preset for the rendering signal,
- determining a matching preset corresponding to the matching profile, and
- determining the rendering signal from the matching preset.

The embodiment thus provides a method for automatically controlling an ambient atmosphere in an area, comprising:
- determining a population characteristics from a plurality of individual characteristics of a plurality of people present in the area,
- initializing a rendering signal with a predetermined rendering signal associated with a predetermined ambient atmosphere corresponding to a predetermined population profile,
- comparing the population characteristic with a plurality of predetermined population profiles for finding a matching profile, wherein each predetermined population profile is associated with a respective predetermined ambient atmosphere with a corresponding preset for the rendering signal,
- determining a matching preset corresponding to the matching profile,
- determining the rendering signal from the matching preset; and
- generating the ambient atmosphere depending on the rendering signal.

In an alternative or further embodiment, determining the rendering signal from the population characteristics according to the predetermined scheme comprises:
- initializing the rendering signal with a predetermined rendering signal associated with a predetermined ambient atmosphere corresponding to a predetermined population profile, and
- in one or more iterations:
   - determining a difference between the population characteristics and the predetermined population profile, and
   - adjusting the rendering signal depending on the difference.

The embodiment thus provides a method for automatically controlling an ambient atmosphere in an area, comprising:
- determining a population characteristics from a plurality of individual characteristics of a plurality of people present in the area,
- initializing a rendering signal with a predetermined rendering signal associated with a predetermined ambient atmosphere corresponding to a predetermined population profile,
- in one or more iterations:
   - determining a difference between the population characteristics and the predetermined population profile, and
   - adjusting the rendering signal depending on the difference; and
   - generating the ambient atmosphere depending on the rendering signal.

In an embodiment, the method comprises detecting a change in the population characteristic and automatically adjusting the ambient atmosphere upon the change in the population characteristic.

In an embodiment, determining the rendering signal further comprises using a predetermined population profile associated with an expected plurality of people expected to be present in the area. The method may thus also take prior knowledge of e.g. the shop owner about the typical population of his shoppers, e.g. at a specific day, time or season, into account.

According to yet another aspect, the invention provides a computer program product arranged to, when loaded in the memory of a computer, execute the method described above. The advantageous effect(s) of the computer program according to the invention compared to the prior art are similar to those described above with reference to the system according to the invention. According to yet another aspect, the invention provides a data carrier comprising a computer program as described above.

It will be appreciated that the article "a", "an" or "the" preceding an element does not exclude the presence of a plurality of such elements. In particular may "a sensor" relate to a single sensor, or to a plurality of sensors. The plurality of sensors may all be sensors of a single type, but may alternatively comprise sensors of one or more different types. Also may "a population characteristic" relate to a single characteristic, such as average age, or to a plurality of characteristics, such as the combination of gender of the majority and average age of the majority. Likewise may "an individual characteristic" relate to a single characteristic of an individual, e.g. his or her age, or to a plurality of characteristics of the individual, e.g. the combination of his or her gender and his or her age. It will further be appreciated that actions may be executed by a single device, e.g. the controller, or in cooperation between multiple devices, e.g. the controller and one or more sensor processors. Each device may be a plurality of units cooperating together to perform the functions of the device.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 schematically depicts an exemplary embodiment of an area with a system according to the invention;
Figs. 2a-2c schematically show flow charts of embodiments of methods according to the invention;
Fig. 3 schematically depicts an exemplary embodiment of an area with subareas according to the invention.

### DETAILED DESCRIPTION OF THE EMBODIMENTS

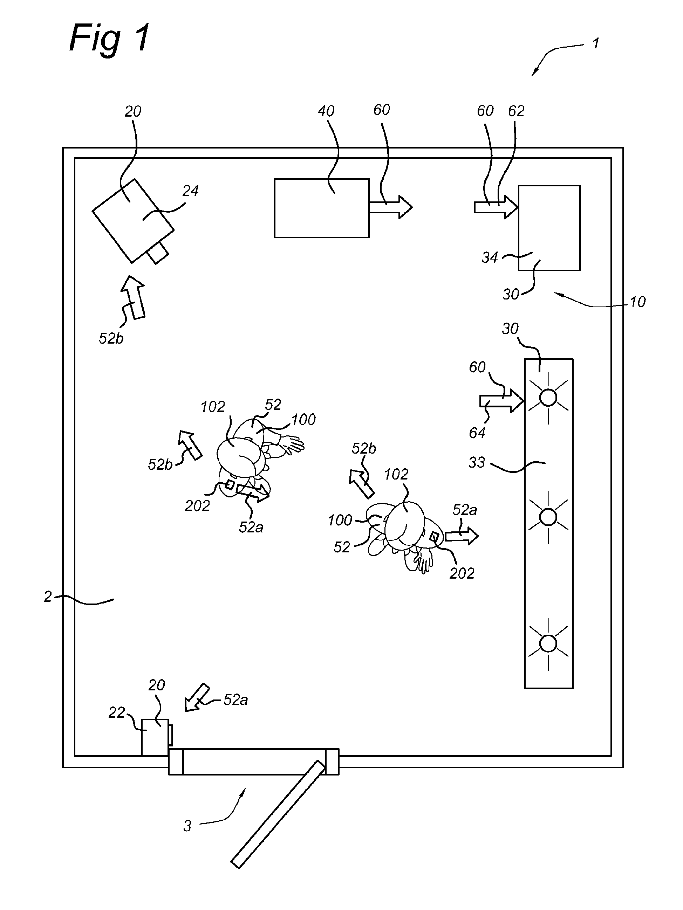

Fig. 1 schematically depicts an area 1 equipped with a system 10 according to an exemplary embodiment of the invention for automatically controlling an ambient atmosphere in the area 1. In the example, the area 1 is a shop comprising a shop floor 2, a door 3 for entering and exiting the shop 1, an entrance sensor 22, a surveillance camera 24, a lighting system 33 and a sound system 34.

The entrance sensor 22 and the surveillance camera 24 act as a sensor 20 of the system 10 and is arranged to generate, during use, a sensor signal indicative for the individual characteristic 52 of people 102 present in the area 1. The lighting system 33 and the sound system 34 act as rendering device 30 of the system 10 and are arranged to generate the ambient atmosphere by, respectively, generating light according to a specific light pattern and by generating a soundscape. It will be understood that the rendering device 30 may comprise further units, such as e.g. a fragrance generator for generating a fragrance in the area. It will also be understood that the sensor may comprise further sensor units or detectors such as e.g. pressure detectors on the floor of the shop to detect positions of persons and/or other cameras for acquiring images from persons present in the shop. It will also be understood that other embodiments may require having an entrance sensor and/or a surveillance camera.

The system 10 further comprises a controller 40 arranged to receive the sensor signal associated with the individual characteristic 52 from the sensor 20, to determine a population characteristic 50 from a plurality 100 of individual characteristics 52 of people 102 present in the area 1 and to determine a rendering signal 60 from the population characteristic 50 according to a predetermined scheme as will be described below, and to provide the rendering signal 60 to the rendering device 30. In this example, the rendering signal 60 may comprise a lighting component 62 for controlling the lighting system 33 and a sound component 64 for controlling the sound system.

In this exemplary embodiment, the entrance sensor 22 is a tag reader 22 arranged to detect a plurality of first individual characteristics 52a of the people 102, from acquiring prestored data on tags 202 carried by the respective persons 102. The tags 202 may e.g. be wireless tags, such as RFID (Radio Frequency Identification) or NFC (Near Field Communication) tags, which could e.g. be provided in a loyalty card for the shop 1, and which are individualized for the person carrying it. The prestored data is indicative of an individual first characteristics of the person, e.g. age, gender, buying behavior, fashion preference and/or other demographic data. The prestored data may be anonymous to prevent privacy-sensitive issues. The entrance sensor 22 acquires prestored data from the tags when a person enters the shop, and stores it in a memory. Once the same person again leaves the shop, the associated prestored data are again removed from the memory. The entrance sensor 22 thus maintains an inventory of individual characteristics of the persons 102 present in the shop 1.

In this exemplary embodiment, the surveillance camera 24 is arranged to acquire one or more images of each person 102 in the shop 1, and to analyze the acquired images for estimating second individual characteristics 52b of the people 102. In this example, the surveillance camera 24 analyzes the images to estimate the fashion preference 52b of each of the people 102.

The sensor 20 further comprises a sensor processor (not shown) which gathers all individual characteristics 52, here comprising all first individual characteristics 52a determined by the entrance sensor 22 and all second individual characteristics 52b determined by the surveillance camera 24. The sensor processor generates the sensor signal from all gathered individual characteristics 52. The controller 40 receives the sensor signal and determines a population characteristic from sensor signal associated with the gathered characteristics, e.g. by determining an age distribution e.g. average and spread) of all persons present as well as an indication of a fashion preference that matches all individual fashion preferences best. The population characteristic is thus determined to reflect the type of people present in the shop at that specific instant in time. The population characteristic could e.g. have been determined as "kids accompanied with adults" and "trendy fashion".

Controller 40 compares the population characteristic to a plurality of prestored profiles. In this example, fifteen prestored profiles are defined as a combination of five age ranges "kids", "youngsters", "adults", "seniors" and "mixed age" and three fashion preference classes "conservative", "trendy" and "mixed fashion". When the population characteristic is "kids accompanied with adults" and "trendy fashion", the best matching prestored profile could e.g. be determined as "kids" and "trendy" to reflect the type of clothing that the shoppers (kids accompanied with one or more adults) mist likely prefer. The "kids" and "trendy" profile could e.g. be associated with a preset for the rendering signal that generates an ambient atmosphere with colorful, highly dynamic lighting and relatively wild music. In contrast could a population characteristic matching a "seniors" and "conservative" profile result a rendering signal associated with high brightness, white lighting, for allowing easy reading by the elderly persons and classic music.

A further embodiment further comprises the determining of a difference between the population characteristic and the best matching profile. Referring to the example above, the difference may be the difference between the average age and the age implicitly assumed for the "seniors" age range: the brightness of the lighting is further adjusted relative to the brightness of the profile proportionally with this difference to compensate for the decreased eyesight with increased age.

In an alternative embodiment, a prestored profile may be used, and the rendering signal is adapted depending on a difference between the population characteristic and the prestored profile. The prestored profile may be a single default profile which is used as a starting point for any population characteristics under any circumstance. The prestored profile may be one of a plurality of prestored prior knowledge-based profiles, of which one prestored profile is selected depending on the expected population, e.g. depending on the time of the day and/or week and/or month and/or season.

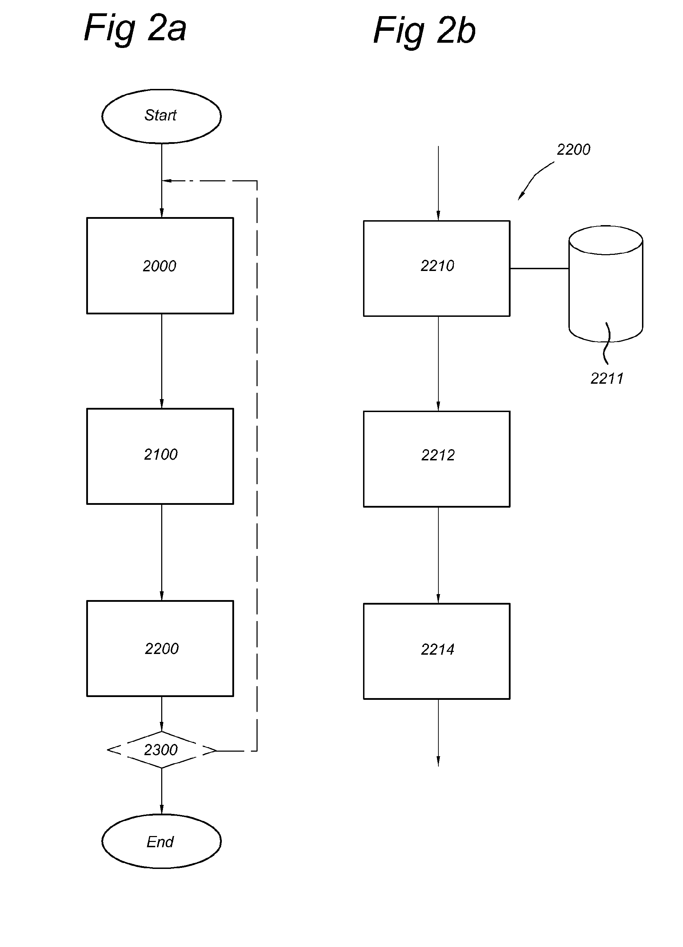

Fig. 2a schematically shows a flow chart of a method according to the invention. Fig. 2a shows that the method starts with determining 2000 a population characteristic from a plurality of individual characteristics of a plurality of people present in the area. Then, the method continues with determining 2100 a rendering signal from the population characteristics according to a predetermined scheme. The method subsequently comprises generating 2200 the ambient atmosphere depending on the rendering signal. The method may optionally continue with checking 2300 whether another iteration of actions 2000, 2100 and 2200 is to be executed. The checking 2300 may e.g. relate to checking whether further elements of the population characteristic have to be taken into account, e.g. when the elements "age range" and "fashion preference" are independently dealt with. The checking 2300 may alternatively relate e.g. to checking whether the population has changed and an adjustment of the ambient atmosphere

Fig. 2b schematically shows a flow chart of a further method according to the invention. In the embodiment, the action of generating 2200 the ambient atmosphere depending on the rendering signal comprises a first action of comparing 2210 the population characteristic with a plurality of predetermined population profiles for finding a matching profile, wherein each predetermined population profile is associated with a respective predetermined ambient atmosphere with a corresponding preset for the rendering signal. The predetermined population profiles with corresponding preset are e.g. stored and retrieved in a memory 2211. Next, the action of generating 2200 continues with a second action of determining 2212 a matching preset corresponding to the matching profile, followed by a third action of determining 2214 the rendering signal from the matching preset. The presets may e.g. correspond to the fifteen prestored profiles defined as a combination of five age ranges "kids", "youngsters", "adults", "seniors" and "mixed age" and three fashion preference classes "conservative", "trendy" and "mixed fashion", as discussed above in relation to Fig. 1. Determining a matching preset may then correspond to determining which of the fifteen prestored profiles matches best with the population characteristic of all people present in the area. This may e.g. be done by determining which of the fifteen prestored profiles is closest and/or which is most compatible: a group having a population characteristic associated with an average age of 65, an age range of 10 years and "grey dressed fashion" will thus match with "seniors" and "conservative". The matching preset would thus be associated with a rendering signal suitable for "conservative" "seniors", which may e.g. correspond to high-brightness lighting and classical music.

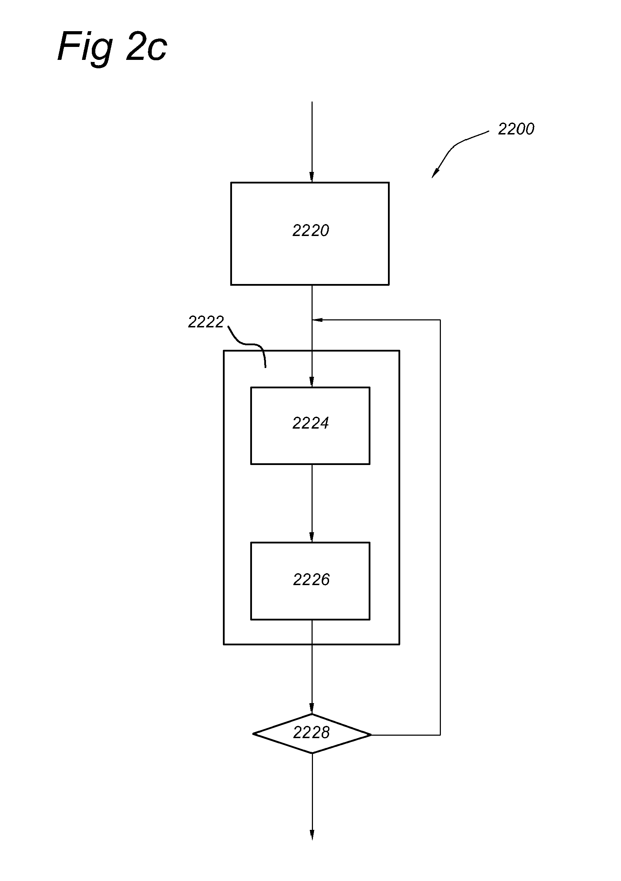

Fig. 2c schematically shows a flow chart of a further method according to the invention. In the embodiment, the action of generating 2200 the ambient atmosphere depending on the rendering signal comprises a first action of initializing 2220 the rendering signal with a predetermined rendering signal associated with a predetermined ambient atmosphere corresponding to a predetermined population profile. Next, the action of generating 2200 continues with one or more iterations 2222. Each iteration comprises the actions of determining 2224 a difference between the population characteristic and the predetermined population profile, and adjusting 2226 the rendering signal depending on the difference. After each iteration, the method comprises checking 2228 whether further iterations are to be performed. In an exemplary embodiment, each iteration may relate to a difference of a specific component of the population characteristic (age, gender, ...), and the iterations are stopped once the rendering signal has been adjusted for each difference. It will be appreciated that the adjustment does not result in any change when the difference is negligible, e.g. when the difference is below a predetermined threshold. In an exemplary embodiment, the predetermined population profile may be referred to as a default profile, relating e.g. to a predetermined average age and a mixed gender, associated with a default rendering signal resulting in an average light level and warm-white lighting. When the population characteristic is a specific age, e.g. a high age, the rendering signal is adjusted to generate a higher light level (as elderly benefit from higher light levels due to the reduced tranmissivity of their eye lenses) and e.g. to a cool-white lighting, which is somewhat more bluish than warm-white lighting (intending to increase the brightness impression and thereby improving the vision of the elderly further).

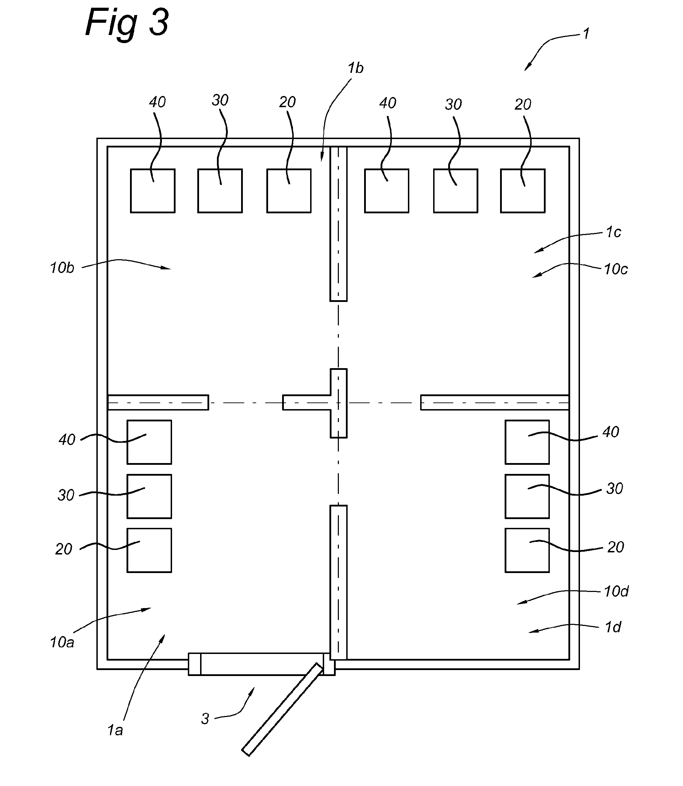

Fig. 3 schematically shows a shop area 1 comprising a plurality of subareas 1a-1d, wherein the ambient atmosphere in each subarea 1a-1d is controlled using respective systems 10, indicated with 10a-10d. In the embodiment shown, all ambient atmospheres are controlled independently. In an alternative embodiment, the control of all ambient atmospheres is supervised by a master controller which is arranged to prevent conflicts between ambient atmospheres of, at least, neighboring area, and thus providing a consistent atmosphere throughout the whole shop area. In Fig. 3, the area 1 has been divided into subareas 1a-1d with walls with openings to allow access from one subarea to the other. It will be appreciated that in alternative embodiments, subareas may have been created as parts of one open area.

Each system 10a-10d is arranged to control the ambient atmosphere in one subarea 1a-1d. Each system 10a-10d comprises one or more sensors 20, one or more rendering devices 30 and a controller 40, and is arranged to operate within the respective subarea 1a-1d in a similar manner as system 1 operate in area 1 in Fig. 1.

In the drawings, less relevant features like electrical cables, etc. have not been drawn for the sake of clarity.

The system is herein often described in use. However, the claims to the system are not confined to the presence of people.

The term "substantially" herein, such as in "substantially flat" or in "substantially consists", etc., will be understood by the person skilled in the art. In embodiments the adjective substantially may be removed. Where applicable, the term "substantially" may also include embodiments with "entirely", "completely", "all", etc. Where applicable, the term "substantially" may also relate to 90% or higher, such as 95% or higher, especially 99% or higher, including 100%. The term "comprise" includes also embodiments wherein the term "comprises" means "consists of".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The term "and/or" includes any and all combinations of one or more of the associated listed items. The article "a" or "an" preceding an element does not exclude the presence of a plurality of such elements. The article "the" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system (10) for automatically controlling an ambient atmosphere in an area (1), comprising:
- a sensor (22) arranged to:
- sense individual characteristics of a plurality of people (102) present in the area (1) and
- generate a corresponding sensor signal;
- a controller (40) arranged to:
- receive the sensor signal,
- determine a population characteristic from the sensor signal, and
- generate a corresponding rendering signal from the population characteristic according to a predetermined scheme; and
- a rendering device (30) arranged to generate the atmosphere depending on the rendering signal.

2. The system (10) according to claim 1, wherein, to generate the corresponding rendering signal from the population characteristic according to the predetermined scheme, the controller (40) is arranged to at least:
- compare the population characteristic with a plurality of predetermined population profiles for finding a matching profile, wherein each predetermined population profile is associated with a respective predetermined ambient atmosphere with a corresponding preset for the rendering signal,
- determine a matching preset corresponding to the matching profile, and
- determine the rendering signal from the matching preset.

3. The system (10) according to claim 1 or 2, wherein, to generate the corresponding rendering signal from the population characteristic according to the predetermined scheme, the controller (40) is arranged to at least:
- initialize the rendering signal with a predetermined rendering signal associated with a predetermined ambient atmosphere corresponding to a predetermined population profile, and
- in one or more iterations:
- determine a difference between the population characteristics and the predetermined population profile, and
- adjust the rendering signal depending on the difference.

4. The system (10) according to any one of the preceding claims, wherein the system (10) is arranged to automatically adjust the ambient atmosphere upon a change in the population characteristic.

5. The system (10) according to any one of the preceding claims, wherein the controller (40) is arranged to determine the population characteristic from one or more of (a) an averaged characteristic and (b) a common characteristic of a predetermined fraction of the plurality of individual characteristics of the plurality of people (102) present in the area (1).

6. The system (10) according to any one of the preceding claims, wherein the rendering device (30) comprises a controllable lighting system (33), preferably comprising at least one light emitting diode.

7. The system (10) according to any one of the preceding claims, wherein the rendering device (30) comprises at least one unit selected from a group consisting of a sound system (34) and a fragrance dispenser.

8. The system (10) according to any one of the preceding claims, wherein the population characteristic is associated with at least a demographic property associated with one or more properties selected from the group consisting of age, gender, fashion and lifestyle of the plurality of people (102) present in the area (1).

9. The system (10) according to any one of the preceding claims, wherein the sensor (20) comprises a detector arranged to detect, for each person of the plurality of people (102), a physical characteristic of the person, and to analyze the physical characteristic to estimate the individual characteristic of the person.

10. The system (10) according to any one of the preceding claims, wherein the sensor (20) comprises a camera (24) for acquiring an image of one or more persons of the plurality of people (102) and an image processor arranged to estimate one or more corresponding individual characteristic from the at least one image using an image processing algorithm.

11. The system (10) according to any one of the preceding claims, wherein the sensor (20) comprises a localization sensor for detecting positions in the area (1), and optionally orientations relative to one or more predefined orientations in the area, of each person of the plurality of people (102).

12. The system (10) according to any one of the preceding claims, wherein the sensor (20) comprises a tag reader arranged to acquire prestored data from a tag carried by a person entering, being present and/or leaving the area, wherein the prestored data is indicative of an individual characteristic of the person.

13. An area (1), in particular a shop or a hospitality area, equipped with a system (10) according to any one of the preceding claims.

14. A method for automatically controlling an ambient atmosphere in an area (1), comprising:
- determining a population characteristic from a plurality of individual characteristics of a plurality of people (102) present in the area (1),
- determining a rendering signal from the population characteristics according to a predetermined scheme, and
- generating the ambient atmosphere depending on the rendering signal.

15. The method according to claim 0, wherein for controlling the ambient atmosphere the system (10) according to any one of claims 1-12 is applied.
